# EUROPÄISCHE PATENTSCHRIFT

(11) **EP 3 377 356 B1**
(45) Veröffentlichungstag und Bekanntmachung des Hinweises auf die Patenterteilung: **17.07.2019**
(21) Anmeldenummer: 16793864.6
(22) Anmeldetag: 08.11.2016
(51) Int. Cl.: B60K 15/05, B60K 13/04, B60K 15/04, B60K 15/035

(54) **EINFÜLLSYSTEM AN EINEM KRAFTFAHRZEUG**
FILLING SYSTEM ON A MOTOR VEHICLE
SYSTÈME DE REMPLISSAGE SUR UN VÉHICULE AUTOMOBILE

(30) Priorität: 17.11.2015 DE 102015222669
(43) Veröffentlichungstag der Anmeldung: 26.09.2018
(73) Patentinhaber: Kautex Textron GmbH & Co. KG, 53229 Bonn (DE)
(72) Erfinder: EULITZ, Dirk, 53115 Bonn (DE)
(74) Vertreter: Richly & Ritschel Patentanwälte PartG mbB
(86) Internationale Anmeldenummer: PCT/EP2016/077008
(87) Internationale Veröffentlichungsnummer: WO 2017/084915

(56) Entgegenhaltungen:
- EP-A1- 2 492 128
- WO-A1-2015/108720
- DE-A1-102010 055 919
- FR-A1- 2 699 464
- FR-A1- 3 019 108
- FR-A1- 3 019 499
- FR-A1- 3 019 776

## Beschreibung

Die Erfindung betrifft ein Einfüllsystem an einem Kraftfahrzeug mit wenigstens zwei Vorratstanks für flüssige oder gasförmige Betriebsstoffe, umfassend eine äußere Tankverschlussabdeckung, die eine Öffnung in der Karosserie des Kraftfahrzeuges verschließt und die aus einer ersten, die Öffnung verschließenden Stellung in eine zweite, die Öffnung freigebende Stellung verbringbar ist, wobei unterhalb der äußeren Tankverschlussabdeckung wenigstens eine Einfüllmulde mit zwei Einfüllstutzen der Vorratstanks angeordnet ist. Einfüllsysteme an Kraftfahrzeugen mit Einfüllöffnungen zu verschiedenen Vorratstanks, die unter einer gemeinsamen äußeren Tankverschlussabdeckung angeordnet sind, sind grundsätzlich im Stand der Technik bekannt, beispielsweise aus der EP 1 449 702 A2, der WO 2006/035013 A1, der FR 3 019 108 A1,der FR 3 019 776 A1, FR 2 699 464 A1, DE 10 2010 055919 A1, FR 3 019 499 A1 oder aus der US 2010/0012205 A1. FR 3 019 108 A1 beschreibt eine Schnittstelle zum Befüllen eines Kraftfahrzeugs, umfassend:
- ein Primärrohr; und
- ein Sekundärrohr;
   wobei jedes der Rohre mit einem separaten Tank verbunden ist und eine Öffnung in der gleichen Ebene aufweist, wobei die Schnittstelle zwei Konfigurationen annehmen kann: - eine primäre Konfiguration, in der das Primärrohr zugänglich ist, während das Sekundärrohr verborgen ist; und
- eine sekundäre Konfiguration, in der das Primärrohr verborgen ist, während das Sekundärrohr zugänglich ist.

Insbesondere für Diesel-Personenkraftfahrzeuge haben sich in jüngster Zeit Abgasentstickungssysteme etabliert, insbesondere solche Abgasentstickungssysteme, die auf dem Prinzip selektiven katalytischen Abgasreduktion mittels einer wässrigen Harnstofflösung beruhen, die in den Abgasstrang des PKW injiziert wird. Hierzu ist es erforderlich, die Harnstofflösung im Kraftfahrzeug zu bevorraten. Tanks zur Aufnahme von Harnstofflösungen sind so bemessen und so angeordnet, dass sie bei der Wartung des Fahrzeuges zu den üblichen Inspektionsinterwallen werkstattseitig mittels Gebinde gefüllt werden können. Zunehmend wird eine Nachfüllbarkeit der Harnstofftanks durch den Fahrzeughalter gefordert, woraus sich die Notwendigkeit ergibt, einen Einfüllstutzen für ein wässriges Abgasentstickungsadditiv von außen zugänglich am Fahrzeug vorzusehen.

Es ist deshalb grundsätzlich bekannt, neben einem Einfüllstutzen für Kraftstoff wenigstens einen weiteren Einfüllstutzen für die Befüllung eines Nebenflüssigkeitsbehälters, wie beispielsweise eines Additivbehälters unterhalb der Tankverschlussabdeckung des Kraftfahrzeuges anzuordnen.

Die vorstehend beschriebene Notwendigkeit, unter einer Tankverschlussabdeckung des Kraftfahrzeuges verschiedene Einfüllstutzen oder Einfüllöffnungen vorzusehen, ergibt sich auch für Kraftfahrzeuge, die sowohl mit flüssigen als auch mit gasförmigen Betriebsstoffen betreibbar sind.

Technisch problematisch ist der für eine solche gemeinsame Anordnung mehrerer Einfüllstutzen unter einer einzigen Tankverschlussabdeckung innerhalb der Karosserie des Kraftfahrzeuges zur Verfügung stehende Bauraum. Dieser muss einerseits so bemessen sein, dass beide Systeme unter einer Tankverschlussabdeckung angeordnet werden können, andererseits muss die Anordnung der Systeme so bemessen sein, dass etwa auf den Einfüllöffnungen vorgesehen Verschlusskappen noch bedienbar im Sinne von aufschraubbar oder abschraubbar sind. Innerhalb der Einfüllmulde muss also hinreichend Platz zur Handhabung der Verschlusskappen vorgesehen sein. Das bedingt, dass die Einfüllstutzen nicht beliebig nahe aneinander angeordnet werden können. Daraus ergibt sich zwangsläufig, dass die Tankverschlussabdeckung gewisse Ausmaße annimmt, die ästhetisch nicht ansprechend sind. Insbesondere bei Kleinfahrzeugen sind verhältnismäßig groß dimensionierte Tankverschlussabdeckungen stilistisch wenig ansprechend.

Zur Lösung dieses Problems wird in der US 2010/0012205 A1 ein Befüllsystem vorgeschlagen, welches eine erste und eine zweite Einfüllöffnung umfasst, die in eine längsverschiebbare Blende eingesetzt sind. Die Blende ist innerhalb der Karosserie des Kraftfahrzeuges zwischen einer ersten Konfiguration und einer zweiten Konfiguration verschiebbar, wobei in der ersten Konfiguration eine erste Einfüllöffnung fluchtend zu einer feststehenden Öffnung in der Karosserie des Kraftfahrzeuges angeordnet ist und wobei in der zweiten Konfiguration die zweite Einfüllöffnung fluchtend zu dieser Öffnung angeordnet ist. Diese Lösung erfordert einen elektrischen Verstellmechanismus und beansprucht darüber hinaus innerhalb der Karosserie des Kraftfahrzeuges verhältnismäßig viel Bauraum. Zweifellos ist ein Vorzug dieser Anordnung, dass die Öffnung in der Karosserie des Kraftfahrzeuges verhältnismäßig klein ausfallen kann und eine dementsprechend kleine Tankverschlussabdeckung erforderlich ist.

Der Erfindung liegt daher die Aufgabe zugrunde, das zuvor beschriebene Einfüllsystem an einem Kraftfahrzeug so zu verbessern, dass es bei hinreichender Entsprechung an ästhetische Anforderungen möglichst wenig Bauraum beansprucht und mechanisch verhältnismäßig einfach gestaltet ist.

Insbesondere soll auch dem Umstand Rechnung getragen werden, dass innerhalb der Einfüllmulde so viel Bauraum zur Verfügung stehen soll, dass beispielsweise bei einer Gebindebetankung eines Vorratstanks für wässrige Harnstofflösungen das Gebinde noch sicher an den betreffenden Einfüllstutzen angeschlossen werden kann. Bei einer solchen Gebindebetankung, die üblicherweise im Gaspendelverfahren durchgeführt wird, ist es erforderlich, die hierfür genormte Flasche, die als sogenannte Kruse-Flasche bezeichnet wird, unmittelbar auf den betreffenden Einfüllstutzen aufzuschrauben.

Die der Erfindung zugrundeliegende Aufgabe wird gelöst durch ein Einfüllsystem an einem Kraftfahrzeug mit den Merkmalen des Anspruchs 1.

Vorteilhafte Ausgestaltungen der Erfindung sind durch die Unteransprüche erfasst.

Erfindungsgemäß ist unterhalb der äußeren Tankverschlussabdeckung, die sich von außen sichtbar in die Karosserie des Kraftfahrzeuges einfügt, eine innere Tankverschlussabdeckung vorgesehen, die beispielsweise einen der zwei Einfüllstutzen abdeckt, wohingegen der andere der zwei Einfüllstutzen frei zugänglich bleibt.

Die innere Tankverschlussabdeckung ist vorzugsweise gleichzeitig als Fehlbetankungsschutz für den von diesem verdeckten Einfüllstutzen vorgesehen. Diese Gestaltung trägt auch dem Umstand Rechnung, dass beispielsweise einer der Einfüllstutzen zur regelmäßigen Betankung mit Kraftstoff vorgesehen ist, wohingegen der andere Einfüllstutzen zur Betankung mit einem sekundären Betriebsstoff wie beispielsweise Wischwasser, Additiv oder dergleichen vorgesehen ist.

Derjenige Einfüllstutzen, der nicht mit Kraftstoff zu befüllen ist, ist dabei zweckmäßigerweise in der ersten Stellung der inneren Tankverschlussabdeckung abgedeckt, so dass zunächst für den Benutzer nach dem Öffnen der äußeren Tankverschlussabdeckung einer der zwei Einfüllstutzen sichtbar und frei zugänglich ist. Dieser Einfüllstutzen kann beispielsweise als sogenanntes "Capless"-Befüllsystem vorgesehen sein.

Hierunter wird im Allgemeinen ein Verschlussklappenmechanismus verstanden, der die Einfüllöffnung eines Einfüllstutzens ohne Verschlusskappe abdichtet. Dadurch wird eine weitere wesentliche Bauraumeinsparung erzielt, da innerhalb des von der Einfüllmulde umschlossenen Raumes kein zusätzlicher Platz für die Handhabung von Verschlusskappen vorgesehen sein muss.

Die innere Tankverschlussabdeckung umfasst zweckmäßigerweise Mittel zum dichten Verschließen eines der zwei Einfüllstutzen, vorzugsweise Mittel zum dichten Verschließen des von der inneren Tankverschlussabdeckung verdeckten Einfüllstutzens.

Die innere Tankverschlussabdeckung kann schwenkbar unter der äußeren Tankverschlussabdeckung angeordnet sein. Sowohl die äußere als auch die innere Tankverschlussabdeckung können an die Struktur der Karosserie des Kraftfahrzeuges angelenkt sein.

Unter einer Einfüllmulde im Sinne der Erfindung ist insbesondere eine Einfassung der Einfüllöffnungen bzw. der Einfüllstutzen zu verstehen, die neben der Funktion des fahrzeugseitigen Verschließens der Öffnung in der Karosserie des Kraftfahrzeuges auch die Funktion des Toleranzausgleichs zwischen den Einfüllstutzen und der Karosserie des Fahrzeuges übernimmt und die den nicht planmäßigen Eintritt von Flüssigkeit in den von der Karosserie umschlossenen Bauraum verhindert.

Die Einfüllmulde kann beispielsweise aus einem thermoplastischen Elastomer oder einem anderen verhältnismäßig weichen thermoplastischen Kunststoff ausgebildet sein. Die Einfüllmulde kann darüber hinaus auch wenigstens eine Dränage Öffnung für unter Umständen bei der Befüllung der Vorratstanks daneben laufende Flüssigkeit aufweisen.

Bei dem Einfüllsystem gemäß der Erfindung ist vorzugsweise vorgesehen, dass die innere Tankverschlussabdeckung in jeder der ersten und zweiten Stellungen einen der zwei Einfüllstutzen freilässt, so dass einer der zwei Einfüllstutzen frei zugänglich angeordnet ist, wenn die äußere Tankverschlussabdeckung sich in der zweiten geöffneten Stellung befindet.

Zweckmäßigerweise ist die innere Tankverschlussabdeckung als Verschlussklappe ausgebildet, die einseitig schwenkbar an der Karosserie des Kraftfahrzeuges angelenkt ist, beispielsweise über ein Scharnier, das von außen betrachtet unterhalb eines Scharniers für die äußere Tankverschlussabdeckung angeordnet ist.

Die innere Tankverschlussabdeckung kann eine Verschlussklappe umfassen, die an einem oder mehreren Schwenkarmen an die Karosserie des Kraftfahrzeuges angelenkt ist. Die Fläche der Tankverschlussabdeckung kann beispielsweise so gewählt sein, dass die Tankverschlussabdeckung sich im Wesentlichen über den gesamten Querschnitt der Einfüllmulde erstreckt, alternativ kann die Tankverschlussabdeckung auch so ausgebildet sein, dass sie eine Verschlussklappe bildet, die nur unwesentlich größer als der abzudeckende Einfüllstutzen ist.

Im ersteren Fall ist es zweckmäßig, wenn die Verschlussklappe eine Durchführung zur Aufnahme eines der zwei Einfüllstutzen in der zweiten Stellung aufweist, zweckmäßigerweise ist diese Durchführung zur Aufnahme desjenigen Einfüllstutzens ausgebildet, der unter der äußeren Tankverschlussabdeckung frei zugänglich bleiben soll.

In der Durchführung können Dichtmittel zur umfänglichen Abdichtung des die Durchführung durchsetzenden Einfüllstutzens vorgesehen sein.

Bei einer Variante des Einfüllsystems gemäß der Erfindung ist vorgesehen, dass die innere Tankverschlussabdeckung wenigstens einen Dichtring oder wenigstens eine Dichtlippe aufweist, der oder die in der ersten Stellung der inneren Tankverschlussabdeckung mit einem Dichtsitz oder einer Dichtfläche eines der zwei Einfüllstutzen oder mit einem Dichtsitz oder einer Dichtfläche der Einfüllmulde zusammenwirkt. Beispielsweise kann die innere Tankverschlussabdeckung auf der der Einfüllmulde zugewandten Seite einen Dichtring aufweisen, der in seiner Größe und umfänglichen Erstreckung so bemessen ist, das er in der ersten Stellung der inneren Tankverschlussabdeckung gegen eine umlaufende Stirnfläche des abzudeckenden Einfüllstutzens anliegt. Alternativ kann die innere Tankverschlussabdeckung an der betreffenden Stelle eine umlaufende Dichtlippe oder einen Dichtkragen aufweisen, die in der ersten Stellung der inneren Tankverschlussabdeckung gegen den Außenumfang des abzudeckenden Einfüllstutzens anliegt. In jedem dieser Fälle bildet der Dichtring oder die Dichtlippe eine Abdichtung in der Ebene der Öffnung des betreffenden Einfüllstutzens.

Alternativ ist es möglich, dass die Tankverschlussabdeckung im wesentlichen den gesamten Querschnitt der von dieser verdeckten Einfüllmulde abdeckt und mit einem Dichtsitz oder einer Dichtfläche der Einfüllmulde zusammenwirkt. In letzterem Fall kann auch die Einfüllmulde mit einer umlaufenden Dichtlippe oder einem umlaufenden Dichtring versehen sein, gegen die ein Dichtsitz der inneren Tankverschlussabdeckung in der ersten Stellung anliegt.

Zusätzlich oder alternativ kann die innere Tankverschlussabdeckung wenigstens einen Verschlussstopfen aufweisen, der in der ersten Stellung der inneren Tankverschlussabdeckung in einen der zwei Einfüllstutzen bzw. in den abzudeckenden der zwei Einfüllstutzen eintaucht.

Weiterhin kann die innere Tankverschlussabdeckung Mittel zur Entlüftung eines der zwei Einfüllstutzen, zweckmäßigerweise Mittel zur Entlüftung des abzudeckenden der zwei Einfüllstutzen aufweisen.

Mittel zur Entlüftung kann beispielsweise ein Entlüftungsventil in der Tankverschlussabdeckung oder beispielsweise eine semipermeable Membrane vorgesehen sein, die eine Öffnung in der inneren Tankverschlussabdeckung überspannt.

Ein erster der zwei Einfüllstutzen kann beispielsweise als Einfüllstutzen für Kraftstoff vorgesehen sein, wobei ein zweiter der zwei Einfüllstutzen als Einfüllstutzen für ein flüssiges Reduktionsmittel zur katalytischen Abgasentstickung vorgesehen sein kann, wobei die innere Tankverschlussabdeckung in der ersten Stellung den zweiten Einfüllstutzen abdeckt.

Die innere Tankverschlussabdeckung kann beispielweise separat von der äußeren Tankverschlussabdeckung ver- und entriegelbar sein. Die äußere Tankverschlussabdeckung wird in der Regel an eine Zentralverriegelungseinrichtung des Kraftfahrzeuges angeschlossen sein und mit der Betätigung dieser Zentralverriegelungseinrichtung ver- und entriegelbar sein. Zweckmäßigerweise ist die innere Tankverschlussabdeckung über separat im Kraftfahrzeug vorgesehene Betätigungsmittel ver- und entriegelbar. Beispielsweise kann vorgesehen sein, dass die innere Tankverschlussabdeckung nur entriegelbar ist, wenn der Füllstand in dem zugeordneten Vorratsbehälter einen vorgegebenen Mindestfüllstand unterschreitet.

Die Erfindung wird nachstehend anhand eines in den Zeichnungen dargestellten Ausführungsbeispiels erläutert.

Es zeigen:
Figur 1 eine Draufsicht auf die Einfüllmulde des Einfüllsystems gemäß der Erfindung an einem Kraftfahrzeug bei geöffneter äußerer Tankverschlussabdeckung und
Figur 2 eine Schnittansicht durch die in Figur 1 gezeigte Anordnung bei geöffneter äußerer Tankverschlussabdeckung, wobei in der Figur schematisch die zwei möglichen Stellungen der inneren Tankverschlussabdeckung eingezeichnet sind.

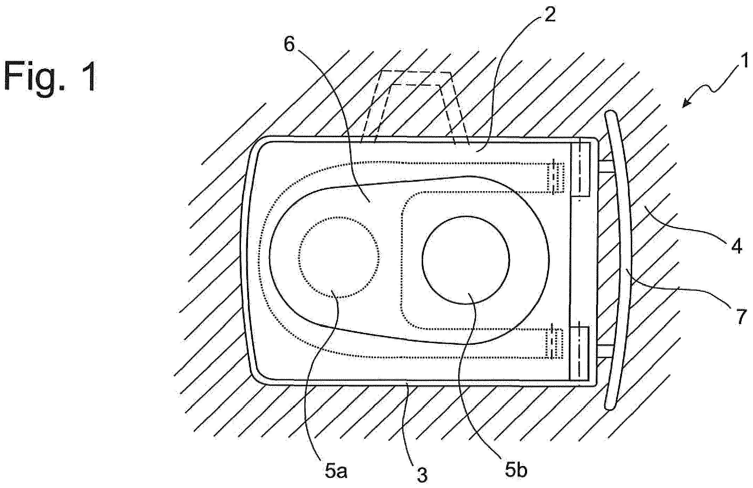

Es wird zunächst Bezug genommen auf die Figur 1, die eine Draufsicht auf die geöffnete Einfüllmulde 2 eines Einfüllsystems 1 gemäß der Erfindung zeigt. Die Einfüllmulde 2 bildet den fahrzeugseitigen Abschluss einer Öffnung 3 in der Karosserie 4 eines Kraftfahrzeuges. Diese ist beispielsweise als muldenförmiger Balg aus einem thermoplastischen Elastomer ausgebildet.

Die Einfüllmulde 2 umfasst zwei Öffnungen, die als Aufnahme für zwei Einfüllstutzen 5a, 5b ausgebildet sind. Der in Figur 1 mit 5a bezeichnete Einfüllstutzen ist in der Darstellung gemäß Figur 1 durch eine innere Tankverschlussabdeckung 6 verdeckt. Die innere Tankverschlussabdeckung 6 ist schwenkbar an der Karosserie 4 des Kraftfahrzeuges angelenkt.

Weiterhin ist eine äußere Tankverschlussabdeckung 7 vorgesehen, die ebenfalls schwenkbar an der Karosserie 4 des Kraftfahrzeuges angelenkt ist. Die äußere Tankverschlussabdeckung 7 ist in Figur 1 in einer zweiten, die Öffnung 3 in der Karosserie 4 des Kraftfahrzeuges freigebenden Stellung dargestellt. In dieser Stellung der äußeren Tankverschlussabdeckung 7 ist der Einfüllstutzen 5b frei zugänglich, wohingegen, wie vorstehend bereits erwähnt, der Einfüllstutzen 5a durch die innere Tankverschlussabdeckung 6 abgedeckt ist.

Der in Figur 1 links andeutungsweise dargestellte Einfüllstutzen 5a umfasst eine Einfüllöffnung in den Einfüllkanal eines als Additivbehälter für eine wässrige Harnstofflösung ausgebildeten Vorratstanks. Der in Figur 1 rechts dargestellte Einfüllstutzen 5b umfasst eine Einfüllöffnung für einen Einfüllkanal eines als Kraftstoffbehälter ausgebildeten Vorratstanks, vorzugsweise eines als Dieselkraftstoffbehälter ausgebildeten Vorratstanks.

Der Einfüllstutzen 5b ist bei dem beschriebenen Ausführungsbeispiel mit einem nicht dargestellten integrierten Verschlussmechanismus (Capless-System) ausgebildet, so dass die Einfüllstutzen 5a, 5b verhältnismäßig nah beieinanderliegend angeordnet werden können und kein zusätzlicher Bauraum zur Manipulation eines Verschlussdeckels erforderlich ist. Im Rahmen der Erfindung kann allerdings der Einfüllstutzen 5b als Einfüllstutzen mit einem herkömmlichen Verschlussdeckel ausgebildet sein.

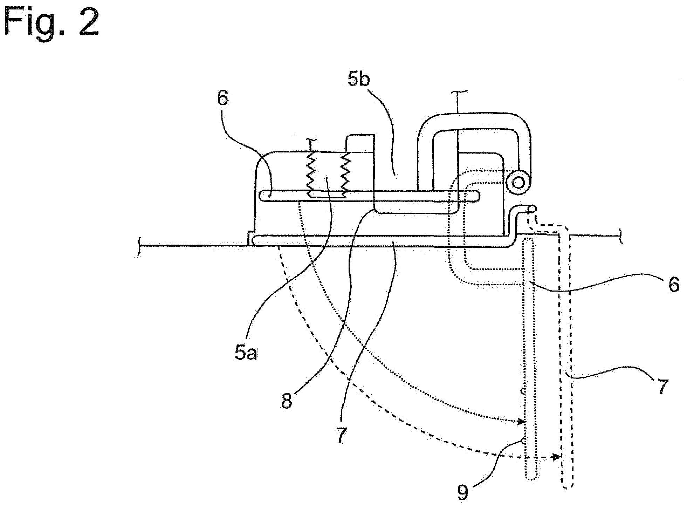

Wie dies insbesondere der Figur 2 zu entnehmen ist, ist die innere Tankverschlussabdeckung 6 als Verschlussklappe ausgebildet, die so bemessen ist, dass sie in der zweiten geschlossenen Stellung im Wesentlichen die gesamte Einfüllmulde 2 und den Einfüllstutzen 5a abdeckt.

Grundsätzlich kann der Einfüllstutzen 5b weiter in die Einfüllmulde 2 hervorstehen als der Einfüllstutzen 5a.

In der ersten verschlossenen Stellung der inneren Tankverschlussabdeckung 6 durchsetzt der Einfüllstutzen 5b eine in der inneren Tankverschlussabdeckung 6 vorgesehene Durchführung 8, deren Querschnitt geringfügig größer als der Durchmesser des Einfüllstutzens 5b ist. Auf diese Art und Weise ist gewährleistet, dass der Einfüllstutzen 5b frei zugänglich ist, wenn die innere Tankverschlussabdeckung 6 sich in der geschlossenen Stellung befindet, in welcher sie den Einfüllstutzen 5a abdeckt.

Auf der der Einfüllmulde 2 zugewandten Seite der inneren Tankverschlussabdeckung 6 ist ein Dichtring 9 befestigt, der eine umlaufende Dichtfläche bildet, die mit einer umlaufenden Stirnfläche des Einfüllstutzens 5a zusammenwirkt, wenn sich die innere Tankverschlussabdeckung 6 in der ersten geschlossenen Stellung befindet.

### Bezugszeichenliste

- 1: Einfüllsystem
- 2: Einfüllmulde
- 3: Öffnung
- 4: Karosserie
- 5a, 5b: Einfüllstutzen
- 6: innere Tankverschlussabdeckung
- 7: äußere Tankverschlussabdeckung
- 8: Durchführung
- 9: Dichtring

## Patentansprüche

1. Einfüllsystem für ein Kraftfahrzeug mit wenigstens zwei Vorratstanks für flüssige oder gasförmige Betriebsstoffe, umfassend eine äußere Tankverschlussabdeckung (7), die eine Öffnung (3) in der Karosserie (4) des Kraftfahrzeuges verschließen kann, wobei unterhalb der äußeren Tankverschlussabdeckung (7) wenigstens eine Einfüllmulde (2) mit zwei Einfüllstutzen (5a,5b)der Vorratstanks angeordnet ist,
und die aus einer ersten, die Öffnung (3) verschließenden Stellung, in eine zweite, die Öffnung (3) freigebende Stellung verbringbar ist, weiterhin umfassend eine innere Tankverschlussabdeckung (6), die in der ersten Stellung der äußeren Tankverschlussabdeckung (7) unter der äußeren Tankverschlussabdeckung (7) angeordnet ist, die ebenfalls von einer ersten geschlossenen Stellung in eine zweite geöffnete Stellung verbringbar ist und die dazu ausgebildet ist, in der ersten Stellung einen der zwei Einfüllstutzen (5a, 5b) abzudecken, wobei die innere Tankverschlussabdeckung (6) als Verschlussklappe ausgebildet ist, die einseitig schwenkbar an die Karosserie (4) des Kraftfahrzeuges anlenkbar ist, **dadurch gekennzeichnet, dass** die Verschlussklappe eine Durchführung zur Aufnahme eines der zwei Einfüllstutzen (5a, 5b) in der ersten Stellung aufweist.

2. Einfüllsystem nach Anspruch 1, **dadurch gekennzeichnet, dass** die innere Tankverschlussabdeckung (6) Mittel zum dichten Verschließen eines der zwei Einfüllstutzen (5a, 5b) aufweist.

3. Einfüllsystem nach einem der Ansprüche 1 oder 2, **dadurch gekennzeichnet, dass** die innere Tankverschlussabdeckung (6) schwenkbar unter der äußeren Tankverschlussabdeckung (7) angeordnet ist.

4. Einfüllsystem nach einem der Ansprüche 1 bis 3, **dadurch gekennzeichnet, dass** die innere Tankverschlussabdeckung (6) in jeder der ersten und zweiten Stellungen einen der zwei Einfüllstutzen (5a, 5b) freilässt.

5. Einfüllsystem nach einem der Ansprüche 1 bis 4, **dadurch gekennzeichnet, dass** die innere Tankverschlussabdeckung (6) wenigstens einen Dichtring (9) oder wenigstens eine Dichtlippe aufweist, der oder die in der ersten Stellung der inneren Tankverschlussabdeckung (6) mit einem Dichtsitz oder einer Dichtfläche eines der zwei Einfüllstutzen (5a, 5b) oder mit einem Dichtsitz oder einer Dichtfläche der Einfüllmulde (2) zusammenwirkt.

6. Einfüllsystem nach einem der Ansprüche 1 bis 5, **dadurch gekennzeichnet, dass** die innere Tankverschlussabdeckung (6) wenigstens einen Verschlussstopfen aufweist, der in der ersten Stellung der inneren Tankverschlussabdeckung (6) in einen der zwei Einfüllstutzen (5a, 5b) eintaucht.

7. Einfüllsystem nach einem der Ansprüche 1 bis 6, **dadurch gekennzeichnet, dass** die innere Tankverschlussabdeckung (6) Mittel zur Entlüftung eines der zwei Einfüllstutzen (5a, 5b) aufweist.

8. Einfüllsystem nach Anspruch 7, **dadurch gekennzeichnet, dass** als Mittel zur Entlüftung eine semipermeable Membrane vorgesehen ist, die eine Öffnung (3) in der inneren Tankverschlussabdeckung (6) überspannt.

9. Einfüllsystem nach einem der Ansprüche 1 bis 8, **dadurch gekennzeichnet, dass** ein erster der zwei Einfüllstutzen (5a, 5b) als Einfüllstutzen (5a) für Kraftstoff vorgesehen ist und dass ein zweiter der zwei Einfüllstutzen (5a, 5b) als Einfüllstutzen (5b) für ein flüssiges Reduktionsmittel zur katalytischen Abgasentstickung vorgesehen ist, wobei die innere Tankverschlussabdeckung (6) in der ersten Stellung den zweiten Einfüllstutzen (5a, 5b) abdeckt.

10. Einfüllsystem nach einem der Ansprüche 1 bis 9, **dadurch gekennzeichnet, dass** die innere Tankverschlussabdeckung (6) separat von der äußeren Tankverschlussabdeckung (7) ver- und entriegelbar ist.

## Claims

1. Filling system for a motor vehicle having at least two storage tanks for liquid or gaseous fuels, comprising an outer tank closure cover (7), which can close an opening (3) in the body (4) of the motor vehicle, at least one filling recess (2) having two filling necks (5a, 5b) of the storage tanks being arranged underneath the outer tank closure cover (7) and being capable of being moved from a first position closing the opening (3) into a second position opening the opening (3), further comprising an inner tank closure cover (6) which, in the first position of the outer tank closure cover (7), is arranged under the outer tank closure cover (7) and which likewise can be moved from a first closed position into a second open position, and which is designed to cover one of the two filling necks (5a, 5b) when in the first position, the inner tank closure cover (6) being formed as a closure flap which can be pivotably attached on one side to the body (4) of the motor vehicle,
**characterized in that** the closure flap has an aperture to receive one of the two filling necks (5a, 5b) when in the first position.

2. Filling system according to Claim 1, **characterized in that** the inner tank closure cover (6) has means for the sealed closure of one of the two filling necks (5a, 5b).

3. Filling system according to either of Claims 1 and 2, **characterized in that** the inner tank closure cover (6) is pivotably arranged under the outer tank closure cover (7).

4. Filling system according to one of Claims 1 to 3, **characterized in that** the inner tank closure cover (6) opens one of the two filling necks (5a, 5b) in each of the first and second positions.

5. Filling system according to one of Claims 1 to 4, **characterized in that** the inner tank closure cover (6) has at least one sealing ring (9) or at least one sealing lip which, in the first position of the inner tank closure cover (6), interacts with a sealing seat or a sealing surface of one of the two filling necks (5a, 5b) or with a sealing seat or a sealing surface of the filling recess (2).

6. Filling system according to one of Claims 1 to 5, **characterized in that** the inner tank closure cover (6) has at least one closure plug which, in the first position of the inner tank closure cover (6), dips into one of the two filling necks (5a, 5b) .

7. Filling system according to one of Claims 1 to 6, **characterized in that** the inner tank closure cover (6) has means for ventilating one of the two filling necks (5a, 5b).

8. Filling system according to Claim 7, **characterized in that** a semi-permeable membrane, which spans an opening (3) in the inner tank closure cover (6), is provided as the ventilating means.

9. Filling system according to one of Claims 1 to 8, **characterized in that** a first of the two filling necks (5a, 5b) is provided as a filling neck (5a) for fuel, and **in that** a second of the two filling necks (5a, 5b) is provided as a filling neck (5b) for a liquid reducing agent for catalytic exhaust gas denitrification, wherein the inner tank closure cover (6) covers the second filling neck (5a, 5b) when in the first position.

10. Filling system according to one of Claims 1 to 9, **characterized in that** the inner tank closure cover (6) can be locked and unlocked separately from the outer tank closure cover (7).

## Revendications

1. Système de remplissage pour un véhicule automobile équipé d'au moins deux réservoirs de stockage pour des carburants sous forme fluide ou gazeuse, comprenant un cache de fermeture de réservoir extérieur (7) pouvant fermer une ouverture (3) prévue dans la carrosserie (4) du véhicule automobile, au moins une auge de remplissage (2) pourvue des deux tubulures de remplissage (5a, 5b) des réservoirs de stockage étant disposée en dessous du cache de fermeture de réservoir extérieur (7) ; et
ladite auge pouvant être amenée d'une première position fermant l'ouverture (3) jusque dans une deuxième position libérant l'ouverture (3) ;
et comprenant en outre un cache de fermeture de réservoir intérieur (6) disposé dans la première position du cache de fermeture de réservoir extérieur (7) en dessous du cache de fermeture de réservoir extérieur (7) et pouvant également être amené d'une première position fermée jusque dans une deuxième position ouverte et réalisé pour recouvrir dans la première position une des deux tubulures de remplissage (5a, 5b) ;
le cache de fermeture de réservoir intérieur (6) étant réalisé sous la forme d'un clapet de fermeture pouvant être orienté de façon à pouvoir pivoter unilatéralement au niveau de la carrosserie (4) du véhicule automobile ;
**caractérisé en ce que** le clapet de fermeture comporte un passage destiné à recevoir une des deux tubulures de remplissage (5a, 5b).

2. Système de remplissage selon la revendication 1, **caractérisé en ce que** le cache de fermeture de réservoir intérieur (6) comporte des moyens de fermeture étanche d'une des deux tubulures de remplissage (5a, 5b).

3. Système de remplissage selon l'une quelconque des revendications 1 ou 2, **caractérisé en ce que** le cache de fermeture de réservoir intérieur (6) est disposé de façon à pouvoir pivoter en dessous du cache de fermeture de réservoir extérieur (7).

4. Système de remplissage selon l'une quelconque des revendications 1 à 3, **caractérisé en ce que** le cache de fermeture de réservoir intérieur (6) libère une des deux tubulures de remplissage (5a, 5b) dans chacune des première et deuxième positions.

5. Système de remplissage selon l'une quelconque des revendications 1 à 4, **caractérisé en ce que** le cache de fermeture de réservoir intérieur (6) comporte au moins une bague d'étanchéité (9) ou au moins une lèvre étanche interagissant dans la première position du cache de fermeture de réservoir intérieur (6) avec un siège d'étanchéité ou une surface d'étanchéité d'une des deux tubulures de remplissage (5a, 5b) ou avec un siège étanche ou une surface d'étanchéité de l'auge de remplissage (2).

6. Système de remplissage selon l'une quelconque des revendications 1 à 5, **caractérisé en ce que** le cache de fermeture de réservoir intérieur (6) comporte au moins un bouchon de fermeture s'enfonçant dans une des deux tubulures de remplissage (5a, 5b) dans la première position du cache de fermeture de réservoir intérieur (6) .

7. Système de remplissage selon l'une quelconque des revendications 1 à 6, **caractérisé en ce que** le cache de fermeture de réservoir intérieur (6) comprend des moyens de purge d'une des deux tubulures de remplissage (5a, 5b).

8. Système de remplissage selon la revendication 7, **caractérisé en ce que** le moyen de dégazage prévu est une membrane semi-perméable recouvrant une ouverture (3) dans le cache de fermeture de réservoir intérieur (6) .

9. Système de remplissage selon l'une quelconque des revendications 1 à 8, **caractérisé en ce qu'**une première des deux tubulures de remplissage (5a, 5b) prévue prend la forme d'une tubulure de remplissage (5a) pour carburant et qu'une deuxième des deux tubulures de remplissage (5a, 5b) prévue prend la forme d'une tubulure de remplissage (5b) pour un agent de réduction fluide servant à la dénitrification des gaz d'échappement catalytiques, le cache de fermeture de réservoir intérieur (6) recouvrant la deuxième tubulure de remplissage (5a, 5b) dans la première position.

10. Système de remplissage selon l'une quelconque des revendications 1 à 9, **caractérisé en ce que** le cache de fermeture de réservoir intérieur (6) peut être verrouillé et déverrouillé séparément du cache de fermeture de réservoir extérieur (7).
